# EUROPEAN PATENT APPLICATION

(11) **EP 4 753 098 A1**
(43) Date of publication of application: **03.06.2026**
(21) Application number: 24845272.4
(22) Date of filing: 21.06.2024
(51) Int. Cl.: H02J 7/00, H01M 10/44, H01M 10/48, H02J 1/00

(54) **ELECTRICITY STORAGE SYSTEM AND ELECTRICITY STORAGE UNIT**

(30) Priority: 25.07.2023 JP 2023120617
(71) Applicant: Panasonic Intellectual Property Management Co., Ltd., Kadoma-shi, Osaka 571-0057 (JP)
(72) Inventor: TAKEUCHI, Motoji, Kadoma-shi, Osaka 571-0057 (JP); OKUMURA, Masashi, Kadoma-shi, Osaka 571-0057 (JP); KAWASAKI, Tetsuya, Kadoma-shi, Osaka 571-0057 (JP); HIROTA, Takuya, Kadoma-shi, Osaka 571-0057 (JP)
(74) Representative: Novagraaf International SA
(86) International application number: PCT/JP2024/022598
(87) International publication number: WO 2025/022890

(57) **Abstract**

Each of controllers provided in electricity storage units connected in parallel to one another is configured to acquire a discharge voltage of an electricity storage pack provided in another electricity storage unit from another controller by communication, and adaptively control an output of a DC/DC converter provided in an electricity storage unit including the controller such that discharge voltages of electricity storage packs provided in the electricity storage units approach one another.

## Description

### TECHNICAL FIELD

The present disclosure relates to an electricity storage system including plural electricity storage units connected in parallel to one another and to a direct-current (DC) bus, and to an electricity storage unit.

### BACKGROUND ART

In order to improve power conversion efficiency in a data center, the Open Compute Project (OCP) or the like has proposed a distributed backup system in which a backup power supply is mounted for each server rack. In this method, since a large output power density of several kW to several tens of kW is required in a short time of about several minutes, a load on a battery is large.

Therefore, a parallel system is often constructed in which plural battery modules are connected in parallel to one another, and power is transformed from each battery module via a DC/DC converter and output. Each of the parallel-connected DC/DC converters shares an output value with other DC/DC converters in communication while detecting its own output current, and controls its own output current (hereinafter, referred to as current-sharing control in the present specification) such that the output currents of all the DC/DC converters become uniform.

However, a parallel system including plural battery units hardly equalize all of output current accuracy of the battery unit, conversion efficiency of the DC/DC converter in the battery unit, an internal resistance of a battery pack, a deterioration degree of the battery pack, or the like with the same characteristics. Due to these variation factors, a discharge current of the battery pack may vary.

In the current-sharing control described above, even when the battery characteristics are the same, a voltage variation may occur between the battery packs due to an error in output accuracy of the battery unit or the like, and the voltage variation may increase. For example, even when the deterioration degree of the battery pack, the state of charge (SOC), and the discharge efficiency of the DC/DC converter are the same, due to an error in the output current between the battery units, the discharge current of the battery pack provided in the battery unit having a large output current increases, a voltage of the battery pack decreases, and the voltage decrease causes a vicious cycle that accelerates the increase in the discharge current of the battery pack. In this case, a capability of the parallel system is not sufficiently exhibited. For example, when a remaining capacity of one battery unit is lost and the battery unit drops out from the parallel system, a current load on the remaining battery units increases, and there is a risk that the remaining battery units stop due to the overcurrent one after another.

PTL 1 discloses a method of determining power distribution such that power to be shared by an electricity storage unit having a relatively small deterioration degree becomes relatively large in order to prevent occurrence of performance variation in the electricity storage units constituting a power supply system for the in-vehicle application. Since the deterioration degree is not a value that changes instantaneously, this method prevents the performance variation among the electricity storage units for a long period of time.

On the other hand, in an application such as a backup system of a data center, a capacity difference or characteristic variation between battery units may greatly change due to replacement of the battery units. Since control and data for calculating the deterioration degree are required, and the deterioration degree itself is an index for capturing a long-term change, the method described above is difficult to immediately follow such a large environmental change between the battery units.

### CITATION LIST

### Patent Literature

PTL 1: Japanese Patent Laid-Open Publication No. 2010-4667

### SUMMARY OF INVENTION

An electricity storage system according to an aspect of the disclosure includes a plurality of electricity storage units connected in parallel to one another, the plurality of electricity storage units configured to be connected to a direct-current (DC) bus connected to a load. Each of the plurality of electricity storage units includes: an electricity storage pack; a DC/DC converter configured to charge and discharge the electricity storage pack; and a controller configured to control the DC/DC converter. The controller is configured to: acquire a discharge voltage of another electricity storage pack of another electricity storage unit from another controller by communication; and adaptively control an output of the DC/DC converter provided in a electricity storage unit out of the plurality of electricity storage units which includes the controller such that discharge voltages of a plurality of the electricity storage packs provided in the plurality of electricity storage units approach one another.

Optional combinations of the above components, and any conversion of the expressions in the disclosure among devices, systems, methods, computer programs, or the like are also valid as aspects of the disclosure.

According to the disclosure, variation in discharge completion timing among a plurality of electricity storage packs provided in electricity storage units connected in parallel is prevented.

### BRIEF DESCRIPTION OF DRAWINGS

FIG. 1 is a schematic diagram of a battery system according to an exemplary embodiment.
FIG. 2 is a flowchart showing an operation of the battery system according to the embodiment.
FIGS. 3(a) and 3(b) show specific examples of discharge voltage Vbat, discharge current Ibat, output voltage Vbus, and output current Ibus when converter modules have characteristic variations.
FIGS. 4(a) and 4(b) show specific examples of a discharge voltage Vbat, a discharge current Ibat, an output voltage Vbus, and an output current Ibus when battery modules have characteristic variations.

### DESCRIPTION OF EMBODIMENTS

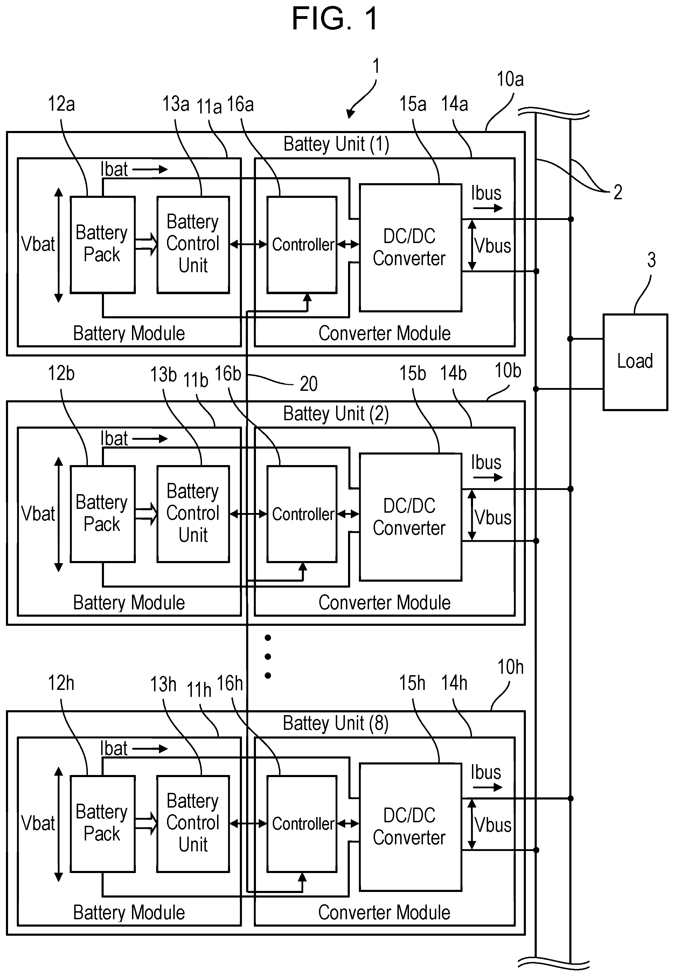

FIG. 1 is a schematic diagram of battery system 1 according to an exemplary embodiment. In a data center, as a countermeasure against a power failure, backup battery system 1 is often used in order to secure a power supply for a time until a generator (for example, a diesel generator) is activated during a power failure. Data may be saved to another server during the power failure, but even in such a case, it is important to secure the power supply for the time until the data saving is completed.

Battery system 1 includes battery units 10 connected in parallel to one another. Battery system 1 is configured to be connected to direct-current (DC) bus 2. In accordance with the embodiment, eight battery units 10 are connected in parallel to one another. The number of the parallel connection is determined depending on power required by load 3. Load 3 to be backed up during a power failure is connected to DC bus 2. Load 3 is a generic term for a server and a storage.

In accordance with the embodiment, eight battery units 10a to 10h and servers and storages as load 3 are accommodated in a rack. A bus bar is disposed as DC bus 2 on a back surface of the rack. The servers and storages accommodated in the rack are configured to receive power supply from the bus bar.

Each battery unit 10 includes battery module 11 and converter module 14. Battery module 11 includes battery pack 12 and battery control unit 13. Converter module 14 includes DC/DC converter 15 and controller 16. Battery control unit 13 and controller 16 may be integrated into one.

Battery pack 12 includes cells connected in series to one another. The cell may be implemented by, e.g., a lithium ion battery cell, a nickel hydrogen battery cell, or a lead battery cell. Hereinafter, in the present description, a lithium ion battery cell with nominal voltage ranging from 3.6 V to 3.7 V is used.

Battery pack 12 is connected to DC/DC converter 15 configured to charge and discharge battery pack 12. DC/DC converter 15 is connected between battery pack 12 and DC bus 2. DC/DC converter 15 is configured to charge battery pack 12 by controlling a voltage or current of the DC power supplied from a commercial power system to DC bus 2 via an inverter. In a backup application of load 3, battery pack 12 stand hy in a state close to a fully charged state. DC/DC converter 15 is configured to control a voltage or current of the DC power discharged from battery pack 12, and output the DC power to DC bus 2.

Battery control unit 13 is configured to control a state of battery pack 12. Battery control unit 13 includes, for example, a combination of an analog front-end IC and a microcontroller. An application specific integrated circuit (ASIC) may be used instead of the analog front-end IC.

The analog front-end IC is configured to measure and monitor a voltage of each cell of battery pack 12, a current flowing through battery pack 12, and a temperature of battery pack 12, and transmit measured data to the microcontroller. The analog front-end IC is configured to measure the current flowing through battery pack 12 by a shunt resistor and a differential amplifier. A Hall element may be used instead of the shunt resistor. The analog front-end IC may measure the temperature of battery pack 12 by dividing an output of a thermistor disposed in battery pack 12.

The microcontroller acquires a total voltage of each battery pack by resistive division of the voltage across battery pack 12. The total voltage may be calculated by adding the voltages of the cells of battery pack 12.

Battery control unit 13 is configured to transmit, to controller 16, battery data, such as a voltage, a current, a temperature, and SOC of battery pack 12. Battery control unit 13 and controller 16 in battery unit 10 are connected by serial communication (for example, Modbus).

Controller 16 is implemented by, for example, a microcontroller. Controller 16 is configured to acquire output voltage Vbus of DC/DC converter 15 and output current Ibus of DC/DC converter 15. Controller 16 may measure output voltage Vbus of DC/DC converter 15 using voltage-dividing resistors and a differential amplifier. Controller 16 may measure output current Ibus of DC/DC converter 15 with a shunt resistor and a differential amplifier. A Hall element or a CT sensor may be used instead of the shunt resistor.

In the current-sharing control described above, controller 16 performs feedback control such that a measured value of output current Ibus is maintained at a target value (for example, 50 A). Controller 16 generates a current command value for increasing output power of DC/DC converter 15 when the measured value of output current Ibus is lower than the target value, and generates a current command value for decreasing the output power of DC/DC converter 15 when the measured value of output current Ibus is higher than the target value. DC/DC converter 15 performs a switching operation according to a drive signal based on the generated current command value. A duty ratio increases as the current command value increases, and the duty ratio decreases as the current command value decreases.

Due to an error in a measurement system of output current Ibus, the measured value of output current Ibus of certain battery unit 10 may be lower than an actual current value. In this case, in the current-sharing control, controller 16 of certain battery unit 10 controls DC/DC converter 15 to obtain more power from battery pack 12. Accordingly, a discharge current flows from this battery pack 12 more than from other battery packs 12, and a voltage of this battery pack 12 drops faster than voltages of other battery packs 12. Accordingly, a discharge current of this battery pack 12 further increases, leading to a vicious cycle in which the voltage of this battery pack 12 further decreases.

When conversion efficiency of DC/DC converter 15 of certain battery unit 10 is lower than conversion efficiency of DC/DC converter 15 of another battery unit 10, controller 16 of certain battery unit 10 controls DC/DC converter 15 to obtain more power from battery pack 12, resulting in the above-described vicious cycle.

The embodiment proposes a control method for preventing such a vicious cycle. In the embodiment, controllers 16a to 16h provided in battery units 10a to 10h, respectively, are connected to one another with communication lines 20. For example, a controller area network (CAN) or Ethernet^{®} may be used for communication among controllers 16a to 16h. If a noise requirement is acceptable, controllers 16a to 16h may be connected to one another by wireless communication.

When the operation of battery system 1 starts due to a power failure or the like, controller 16 acquires discharge voltage Vbat and discharge current Ibat of battery pack 12 provided in another battery unit 10, and output voltage Vbus and output current Ibus of DC/DC converter 15 from another controller 16 by communication. Among these, discharge voltage Vbat of battery pack 12 is essential data. Discharge current Ibat of battery pack 12 and output voltage Vbus and output current Ibus of DC/DC converter 15 are for confirmation and may be omitted.

Controller 16 is configured to adaptively control the output of DC/DC converter 15 provided in own battery unit 10 such that discharge voltages Vbat of battery packs 12a to 12h provided in battery units 10a to 10h approach one another. This operation will be detailed below.

Controller 16 performs feedback control such that the measured value of output voltage Vbus is maintained at a target value (for example, 50 V). Controller 16 generates a voltage command value for increasing the output power of DC/DC converter 15 when the measured value of output voltage Vbus is lower than the target value. Controller 16 generates a voltage command value for decreasing the output power of DC/DC converter 15 when the measured value of output voltage Vbus is higher than the target value. DC/DC converter 15 performs a switching operation according to a drive signal based on the generated voltage command value. A duty ratio of the DC/DC converter increases as the voltage command value increases, and the duty ratio decreases as the voltage command value decreases.

When discharge voltage Vbat of battery pack 12 provided in own battery unit 10 including the controller 16 is lower than discharge voltages Vbat of all other battery packs 12 acquired from other controllers 16, controller 16 decreases the target value of output voltage Vbus of own DC/DC converter 15 by a predetermined value. While discharge voltage Vbat of own battery pack 12 is lower than discharge voltages Vbat of all other battery packs 12, controller 16 gradually decreases the target value of output voltage Vbus of own DC/DC converter 15 stepwise by a predetermined value. The predetermined value is determined by a designer based on results of experiments and simulations. When discharge voltage Vbat of own battery pack 12 becomes equal to discharge voltages Vbat of all other battery packs 12, controller 16 stops decreasing the target value of output voltage Vbus.

When the target value of output voltage Vbus of DC/DC converter 15 of certain battery unit 10 decreases, the power supplied from certain battery unit 10 to load 3 decreases. The decrease in the power supplied to load 3 is compensated by increasing output currents Ibus of other battery units 10 accordingly.

When output current Ibus of own DC/DC converter 15 exceeds an upper limit value, controller 16 decreases the target value of output voltage Vbus of own DC/DC converter 15 by a predetermined value. The upper limit value of output current Ibus is set to α (for example, 0.7) times an overcurrent threshold of output current Ibus of own DC/DC converter 15.

When discharge current Ibat of battery pack 12 provided in own battery unit 10 exceeds an upper limit value, controller 16 decreases the target value of output voltage Vbus of own DC/DC converter 15 by a predetermined value. The upper limit value of discharge current Ibat is set to β (for example, 0.7) times an overcurrent threshold of discharge current Ibat of battery pack 12.

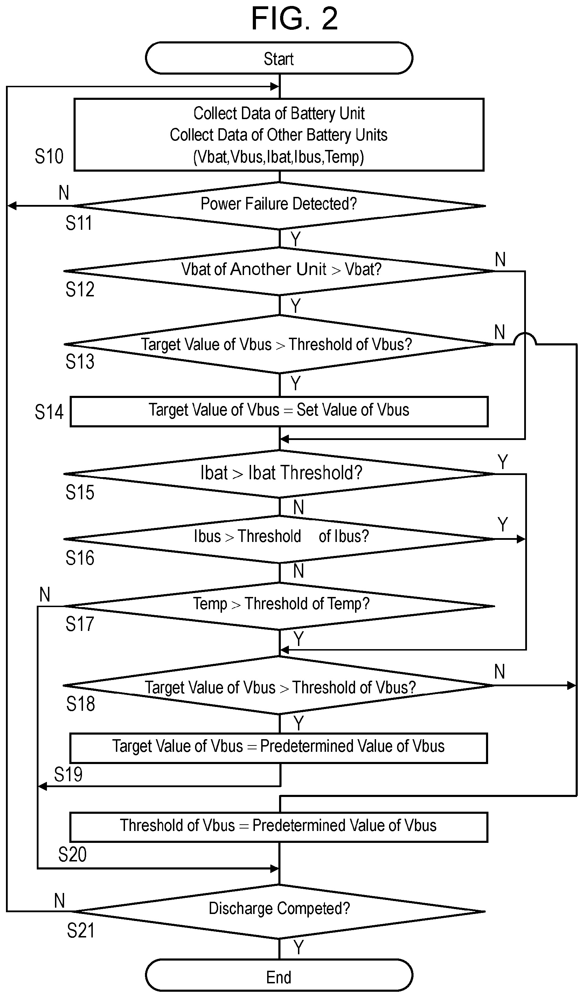

FIG. 2 is a flowchart of an operation of battery system 1 according to the embodiment. Each of controllers 16 of battery units 10a to 10h acquires measurement data (discharge voltage Vbat, discharge current Ibat, output voltage Vbus, output current Ibus, and temperature Temp) of own battery unit 10 and other battery units 10 periodically at a predetermined period (S10). When a power failure of the commercial power system is detected ("Y" in S11), each of controllers 16 of battery units 10a to 10h compares discharge voltage Vbat of another battery pack 12 with discharge voltage Vbat of own battery pack 12 (S12).

When discharge voltage Vbat of own battery pack 12 is lower than discharge voltage Vbat of another battery pack 12 ("Y" in S12), controller 16 compares the target value of output voltage Vbus of own DC/DC converter 15 with a threshold of voltage Vbus of DC bus 2 (S13). The threshold of voltage Vbus of DC bus 2 is a lower limit value of voltage Vbus of DC bus 2 determined based on a specification required by load 3.

When the target value of output voltage Vbus is higher than the threshold of voltage Vbus of DC bus 2 ("Y" in S13), controller 16 updates the target value of output voltage Vbus of own DC/DC converter 15 to a set value (S14). Specifically, the target value of output voltage Vbus is updated to a value lower than a current value by a predetermined value.

In step S12, when discharge voltage Vbat of own battery pack 12 is not lower than discharge voltage Vbat of another battery pack 12 (not in the lowest state) ("N" in S12), steps S13 to S14 are skipped. In step S13, when the target value of output voltage Vbus is equal to or less than the threshold of voltage Vbus of DC bus 2 ("N" in S13), the processing proceeds to step S20 described later.

Each controller 16 compares discharge current Ibat of battery pack 12 provided in own battery unit 10 including the each controlled 16 with a threshold (upper limit current value) of discharge current Ibat (S15). When discharge current Ibat of battery pack 12 provided in own battery unit 10 is equal to or less than the threshold of discharge current Ibat ("N" in S15), corresponding controller 16 compares output current Ibus of own DC/DC converter 15 with a threshold (upper limit current value) of output current Ibus (S16). When output current Ibus of own DC/DC converter 15 is equal to or less than the threshold of output current Ibus ("N" in S 16), corresponding controller 16 compares temperature Temp of own battery pack 12 with a threshold (upper limit temperature value) of temperature Temp of battery pack 12 (S17). When temperature Temp of own battery pack 12 is equal to or less than the threshold of temperature Temp of battery pack 12 ("N" in S17), the processing proceeds to step S21 described later.

When discharge current Ibat of battery pack 12 provided in own battery unit 10 exceeds the threshold of discharge current Ibat ("Y" in S15), when output current Ibus of own DC/DC converter 15 exceeds the threshold of output current Ibus ("Y" in S16), or when temperature Temp of own battery pack 12 exceeds the threshold of temperature Temp of battery pack 12 ("Y" in S17), corresponding controller 16 compares the target value of output voltage Vbus of own DC/DC converter 15 with the threshold of voltage Vbus of DC bus 2 (S18).

When the target value of output voltage Vbus is higher than the threshold of voltage Vbus of DC bus 2 ("Y" in S18), controller 16 updates the target value of output voltage Vbus of own DC/DC converter 15 to a set value (S19). Specifically, the target value of output voltage Vbus is updated to a value lower than the current value by a predetermined value. When the target value of output voltage Vbus is equal to or less than the threshold of voltage Vbus of DC bus 2 ("N" in S18), controller 16 updates the threshold of voltage Vbus of DC bus 2 to a set value when the lower limit value of voltage Vbus of DC bus 2 changes due to load fluctuation or the like (S20). The threshold of voltage Vbus of DC bus 2 may be a fixed value. In this case, when the target value of output voltage Vbus is equal to or less than the threshold of voltage Vbus of DC bus 2 ("N" in S18), the processing of changing the target value of output voltage Vbus to the same value as the threshold of voltage Vbus of DC bus 2, which is set as a fixed value, is performed instead of the processing of step S20. The processing of steps S10 to S20 is continuously executed ("N" in S21) until the discharge from battery system 1 is completed ("Y" in S21).

In the flowchart shown in FIG. 2, when the target value of output voltage Vbus of certain battery unit 10 decreases, the output power of certain battery unit 10 decreases, accordingly applying an increasing pressure to output current Ibus in another battery unit 10. In battery unit 10 in which output current Ibus or discharge current Ibat reaches the upper limit value due to the increasing pressure, the target value of output voltage Vbus is decreased and the output power is decreased. This decrease in the output power applies an increasing pressure to output current Ibus in another battery unit 10. In battery unit 10 in which output current Ibus or discharge current Ibat reaches the upper limit value due to the increasing pressure, the target value of output voltage Vbus is decreased and the output power is decreased. Hereinafter, in the description, the control shown in the flowchart of FIG. 2 is referred to as a closed circuit voltage (CCV) control.

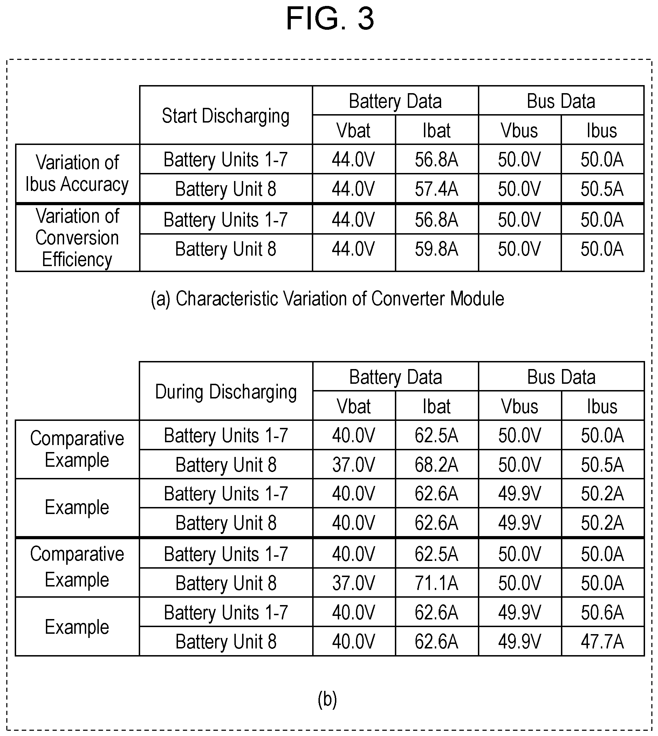

FIGS. 3(a) and 3(b) show specific examples of discharge voltage Vbat, discharge current Ibat, output voltage Vbus, and output current Ibus when converter module 14 has characteristic variations. FIG. 3(a) shows specific examples of discharge voltage Vbat, discharge current Ibat, output voltage Vbus, and output current Ibus in the current-sharing control (comparative example) and the CCV control (example) at the start of discharge. FIG. 3(b) shows specific examples of discharge voltage Vbat, discharge current Ibat, output voltage Vbus, and output current Ibus in the current-sharing control (comparative example) and the CCV control (example) during discharge. In the example shown in FIGS. 3(a) and 3(b), characteristics of first battery module 11a to eighth battery module 11h are the same.

In this specific example, the target value of output voltage Vbus is set to 50.0 V in the current-sharing control (comparative example). In the CCV control (example), an initial target value of output voltage Vbus is set to 50.0 V, but the target value of output voltage Vbus is changed according to the value of discharge voltage Vbat of each battery unit.

In the example of variations of accuracy of output current Ibus shown in FIG. 3(a), the accuracy of output currents Ibus of first battery unit 10a to seventh battery unit 10g is the same, and the measured output current Ibus of eighth battery unit 10h is lower than an actual output current. Therefore, the output power of eighth battery unit 10h increases, and the actual current value of output current Ibus of eighth battery unit 10h is 50.5 A.

Since the output power of eighth battery unit 10h is higher than the output power of first battery unit 10a to seventh battery unit 10g, discharge current Ibat (57.4 A) at the start of discharge of eighth battery unit 10h is higher than discharge current Ibat (56.8 A) at the start of discharge of first battery unit 10a to seventh battery unit 10g.

When discharge current Ibat of eighth battery unit 10h is higher than discharge current Ibat of first battery unit 10a to seventh battery unit 10g, in the current-sharing control (comparative example), the output power of eighth battery unit 10h is continuously higher than the output power of first battery unit 10a to seventh battery unit 10g. Accordingly, discharge voltage Vbat of eighth battery unit 10h decreases faster than discharge voltage Vbat of first battery unit 10a to seventh battery unit 10g. Accordingly, discharge current Ibat of eighth battery unit 10h increases faster than discharge current Ibat of first battery unit 10a to seventh battery unit 10g.

In the state shown in FIG. 3(b), discharge voltage Vbat is 37.0 V and discharge current Ibat is 68.2 A in eighth battery unit 10h while discharge voltage Vbat of is 40.0 V and discharge current Ibat is 62.5 A in first battery unit 10a to seventh battery unit 10g. Discharge voltage Vbat of eighth battery unit 10h is much lower than that of first battery unit 10a to seventh battery unit 10g, and discharge current Ibat of eighth battery unit 10h is much higher than that of first battery unit 10a to seventh battery unit 10g, as compared with the start of discharge.

On the other hand, in the CCV control (example), when discharge voltage Vbat of eighth battery unit 10h decreases with respect to discharge voltage Vbat of first battery unit 10a to seventh battery unit 10g, the target value of output voltage Vbus of eighth battery unit 10h decreases, and the output power of eighth battery unit 10h decreases. Accordingly, input power of DC/DC converter 15h of eighth battery unit 10h also decreases.

When the input power of DC/DC converter 15h of eighth battery unit 10h decreases, discharge voltage Vbat of first battery unit 10a to eighth battery unit 10h uniformly decrease, and discharge current Ibat of first battery unit 10a to eighth battery unit 10h uniformly increase.

In the example of the variation in the conversion efficiency of DC/DC converter 15 shown in FIG. 3(a), the conversion efficiencies of DC/DC converters 15a to 15g of first battery unit 10a to seventh battery unit 10g are the same, and the conversion efficiency of DC/DC converter 15h of eighth battery unit 10h is lower than the others. Since the conversion efficiency of DC/DC converter 15h of eighth battery unit 10h is lower than the others, the input power of DC/DC converter 15h of eighth battery unit 10h is higher than the input power of DC/DC converters 15a to 15g of first battery unit 10a to seventh battery unit 10g. Accordingly, discharge current Ibat (59.8 A) at the start of discharge of eighth battery unit 10h is higher than discharge current Ibat (56.8 A) at the start of discharge of first battery unit 10a to seventh battery unit 10g.

When discharge current Ibat of eighth battery unit 10h is higher than discharge current Ibat of first battery unit 10a to seventh battery unit 10g, the current-sharing control (comparative example) causes the input power of DC/DC converter 15h of eighth battery unit 10h to be continuously higher than the input power of DC/DC converters 15a to 15g of first battery unit 10a to seventh battery unit 10g. Accordingly, discharge voltage Vbat of eighth battery unit 10h decreases faster than discharge voltage Vbat of first battery unit 10a to seventh battery unit 10g. Accordingly, discharge current Ibat of eighth battery unit 10h increases faster than discharge current Ibat of first battery unit 10a to seventh battery unit 10g.

In the state shown in FIG. 3(b), discharge voltage Vbat is 37.0 V and discharge current Ibat is 71.1 A in eighth battery unit 10h while discharge voltage Vbat is 40.0 V and discharge current Ibat is 62.5 A in first battery unit 10a to seventh battery unit 10g. Discharge voltage Vbat of eighth battery unit 10h is thus much lower than that of first battery unit 10a to seventh battery unit 10g, and discharge current Ibat of eighth battery unit 10h is much higher than that of first battery unit 10a to seventh battery unit 10g, as compared with the start of discharge.

On the other hand, in the CCV control (example), when discharge voltage Vbat of eighth battery unit 10h decreases with respect to discharge voltage Vbat of first battery unit 10a to seventh battery unit 10g, the target value of output voltage Vbus of eighth battery unit 10h decreases, and thus the output power of eighth battery unit 10h decreases. Accordingly, the input power of DC/DC converter 15h of eighth battery unit 10h also decreases.

When the input power of DC/DC converter 15h of eighth battery unit 10h decreases, discharge voltages Vbat of first battery unit 10a to eighth battery unit 10h uniformly decrease, and discharge currents Ibat of first battery unit 10a to eighth battery unit 10h uniformly increase. Although output current Ibus of DC/DC converter 15h of eighth battery unit 10h is lower than output current Ibus of first battery unit 10a to eighth battery unit 10h, there is no problem as long as the output current of entire battery system 1 is acceptable to the requirement of load 3.

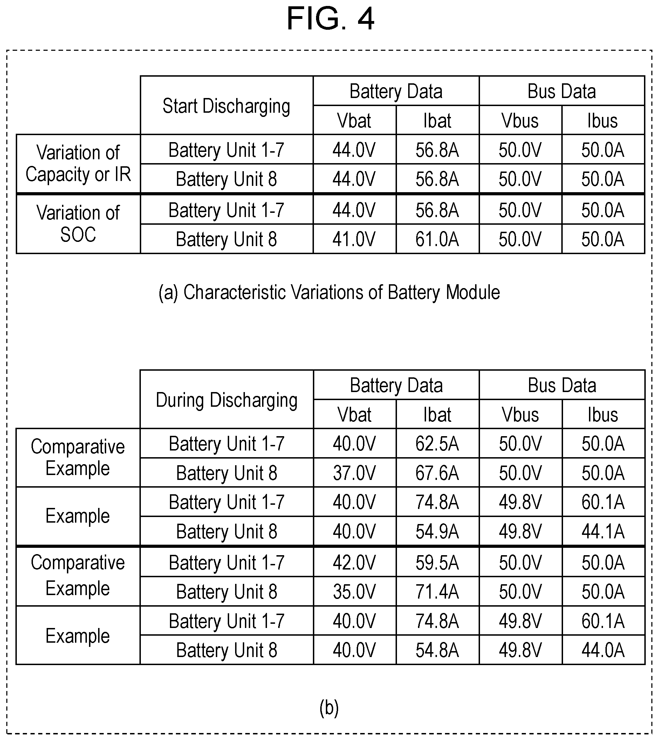

FIGS. 4(a) and 4(b) show specific examples of discharge voltage Vbat, discharge current Ibat, output voltage Vbus, and output current Ibus when battery module 11 has characteristic variations. FIG. 4(a) shows specific examples of discharge voltage Vbat, discharge current Ibat, output voltage Vbus, and output current Ibus in the current-sharing control (comparative example) and the CCV control (example) at the start of discharge. FIG. 4(b) shows specific examples of the current-sharing control (comparative example) and the CCV control (example) during discharge. In the example shown in FIGS. 4(a) and 4(b), characteristics of first converter module 14a to eighth converter module 14h are the same.

In an example of variations of capacity shown in FIG. 4(a), capacities of battery packs 12a to 12g of first battery unit 10a to seventh battery unit 10g are the same, and a capacity of battery pack 12h of eighth battery unit 10h is smaller (deteriorates more). In this example, voltages of battery packs 12a to 12g of first battery unit 10a to eighth battery unit 10h are the same, and the capacity of battery pack 12h of eighth battery unit 10h is smaller than that of battery packs 12a to 12g of first battery unit 10a to seventh battery unit 10g.

In the current-sharing control (comparative example), DC/DC converters 15a to 15g continuously require the same input power from battery packs 12a to 12h of first battery unit 10a to eighth battery unit 10h. Since the capacity of battery pack 12h of eighth battery unit 10h is smaller than that of battery packs 12a to 12g of first battery unit 10a to seventh battery unit 10g, discharge voltage Vbat of eighth battery unit 10h decreases faster than discharge voltage Vbat of first battery unit 10a to seventh battery unit 10g after the start of discharge. Accordingly, discharge current Ibat of eighth battery unit 10h increases faster than discharge current Ibat of first battery unit 10a to seventh battery unit 10g.

In the state shown in FIG. 4(b), discharge voltage Vbat is 37.0 V and discharge current Ibat is 67.6 A in eighth battery unit 10h while discharge voltage Vbat is 40.0 V and discharge current Ibat is 62.5 A in first battery unit 10a to seventh battery unit 10g. Discharge voltage Vbat of eighth battery unit 10h is thus much lower than that of first battery unit 10a to seventh battery unit 10g, and discharge current Ibat of eighth battery unit 10h is much higher than that of first battery unit 10a to seventh battery unit 10g, as compared with the start of discharge.

The above phenomenon also occurs when internal resistance IR of battery pack 12h of eighth battery unit 10h is higher than internal resistance IR of battery packs 12a to 12g of first battery unit 10a to seventh battery unit 10g.

On the other hand, in the CCV control (example), when discharge voltage Vbat of eighth battery unit 10h decreases with respect to discharge voltage Vbat of first battery unit 10a to seventh battery unit 10g, the target value of output voltage Vbus of eighth battery unit 10h decreases, thus decreasing the output power of eighth battery unit 10h. Accordingly, the input power of DC/DC converter 15h of eighth battery unit 10h also decreases.

When the input power of DC/DC converter 15h of eighth battery unit 10h decreases, discharge voltage Vbat of first battery unit 10a to eighth battery unit 10h uniformly decrease. Discharge current Ibat of first battery unit 10a to seventh battery unit 10g increases, and discharge current Ibat of eighth battery unit 10h decreases. Although output current Ibus of DC/DC converter 15h of eighth battery unit 10h is lower than output current Ibus of first battery unit 10a to eighth battery unit 10h, there is no problem as long as the output current of entire battery system 1 is acceptable to the requirement of load 3.

In an example of SOC variation shown in FIG. 4(a), SOCs of battery packs 12a to 12g of first battery unit 10a to seventh battery unit 10g are the same, and an SOC of battery pack 12h of eighth battery unit 10h is lower (voltage is lower). Since the voltage of battery pack 12h of eighth battery unit 10h is lower than the voltages of battery packs 12a to 12g of first battery unit 10a to seventh battery unit 10g, discharge current Ibat (61.0 A) at the start of discharge of eighth battery unit 10h is higher than discharge current Ibat (56.8 A) at the start of discharge of first battery unit 10a to seventh battery unit 10g.

In the current-sharing control (comparative example), DC/DC converters 15a to 15g continuously require the same input power from battery packs 12a to 12h of first battery unit 10a to eighth battery unit 10h. Since discharge current Ibat of eighth battery unit 10h is higher than discharge current Ibat of first battery unit 10a to seventh battery unit 10g, discharge voltage Vbat of eighth battery unit 10h decreases faster than discharge voltage Vbat of first battery unit 10a to seventh battery unit 10g. Accordingly, discharge current Ibat of eighth battery unit 10h increases faster than discharge current Ibat of first battery unit 10a to seventh battery unit 10g.

In the state shown in FIG. 4(b), discharge voltage Vbat is 35.0 V and discharge current Ibat is 71.4 A in eighth battery unit 10h while discharge voltage Vbat is 40.0 V and discharge current Ibat is 59.5 A in first battery unit 10a to seventh battery unit 10g. Discharge voltage Vbat of eighth battery unit 10h is thus much lower than that of first battery unit 10a to seventh battery unit 10g, and discharge current Ibat of eighth battery unit 10h is much higher than that of first battery unit 10a to seventh battery unit 10g, as compared with the start of discharge.

On the other hand, in the CCV control (example), when discharge voltage Vbat of eighth battery unit 10h decreases with respect to discharge voltage Vbat of first battery unit 10a to seventh battery unit 10g, the target value of output voltage Vbus of eighth battery unit 10h decreases, thus decreasing the output power of eighth battery unit 10h. Accordingly, the input power of DC/DC converter 15h of eighth battery unit 10h also decreases.

When the input power of DC/DC converter 15h of eighth battery unit 10h decreases, discharge voltages Vbat of first battery unit 10a to eighth battery unit 10h uniformly decrease. Discharge current Ibat of first battery unit 10a to seventh battery unit 10g increases, and discharge current Ibat of eighth battery unit 10h decreases. Although output current Ibus of DC/DC converter 15h of eighth battery unit 10h is lower than output current Ibus of first battery unit 10a to eighth battery unit 10h, there is no problem as long as the output current of entire battery system 1 is acceptable to the requirement of load 3.

As described above, according to the embodiment, output voltage Vbus of each DC/DC converter 15 is adjusted such that discharge voltage Vbat of each battery pack 12 becomes uniform, thereby allowing the SOCs of the plurality of battery packs 12 during discharge to be uniform. This configuration prevents variation in SOC between battery packs 12 due to an accuracy error in output current between battery units 10, degradation and variation in internal resistance between battery packs 12, temperature variation, module replacement, or the like. During discharge, the SOCs among battery packs 12 equal to one another maintains this state, and reduces the variation in the SOCs can be reduced when variation in the SOCs among battery packs 12 occurs.

This configuration prevents some of battery packs 12 from completing discharge earlier. When some of battery packs 12 drop out from the parallel system, the current load on remaining battery packs 12 increases, and entire battery system 1 is stopped. Preventing some of battery packs 12 from completing discharge earlier secures a backup time of battery system 1 at the time of power failure.

In accordance with the embodiment, since the output of DC/DC converter 15 is controlled based on discharge voltage Vbat which is an instantaneous value, it is possible to instantaneously cope with environmental changes such as temperature changes. In the method of controlling the output based on battery deterioration as disclosed in PTL 1, when some battery packs are more extremely deteriorated, almost no current is supplied from the deteriorated battery packs, and the current load on the other battery packs increases, which leads to the stop of the battery system.

On the other hand, in accordance with the embodiment, the lower limit value is set to output voltage Vbus of DC/DC converter 15, the upper limit value is set to output current Ibus of DC/DC converter 15, and the upper limit value is set to discharge current Ibat of battery pack 12. Even when some of the battery packs extremely deteriorate more, this configuration avoids a situation where almost no current is supplied from the deteriorated battery packs.

The disclosure has been described above based on the embodiment. The embodiment intended to be illustrative only and it will be understood by those skilled in the art that various modifications to combinations of components and processes are possible and that such modifications are also within the scope of the disclosure.

For example, battery module 11 and converter module 14 in battery unit 10 may be integrated, and the microcontroller of battery control unit 13 and the microcontroller of controller 16 may be integrated.

In the above embodiment, an example in which battery system 1 is used for backup of the data center has been described. In this regard, battery system 1 may be used for backup in factory automation, base stations, commercial facilities, offices, apartment houses, and detached houses. In addition to the backup application, it can also be used for peak shift applications and ancillary applications. It can also be used for in-vehicle applications.

In the above embodiment, the example in which battery pack 12 including the lithium ion battery cell is used has been described. In this regard, a capacitor pack including an electric double layer capacitor cell, a lithium ion capacitor cell, or the like may be used. In the present specification, the battery pack and the capacitor pack are collectively referred to as an electricity storage pack.

The embodiment may be specified by the following items.

### Item 1

An electricity storage system (1) including:
a plurality of electricity storage units (10a-10h) connected in parallel to one another, the plurality of electricity storage units (10a-10h) being connected to a direct-current (DC) bus (2) connected to a load (3).

Each of the plurality of electricity storage units (10) includes:
an electricity storage pack (12),
a DC/DC converter (15) configured to charge and discharge the electricity storage pack (12), and
a controller (16) configured to control the DC/DC converter (15).
the controller (16) is configured to:
acquire a discharge voltage of the electricity storage pack (12) provided in another electricity storage unit (10) from another controller (16) by communication; and
adaptively control an output of the DC/DC converter (15) provided in an electricity storage unit (10) (including the controller among the plurality of electricity storage units) such that discharge voltages of a plurality of the electricity storage packs (12a-12h) provided in the plurality of electricity storage units (10a-10h) approach one another.

That is, the plurality of electricity storage units (10) include:
a plurality of the electricity storage packs (12);
a plurality of the DC/DC converters (15) configured to charge and discharge the plurality of electricity storage packs (12); and
a plurality of controllers (16) configured to control the plurality of DC/DC converters (15).

Each electricity storage unit (10) among the plurality of electricity storage units (10) includes:
a corresponding electricity storage pack (12) among the plurality of electricity storage packs (12);
a corresponding DC/DC converter (15) among the plurality of DC/DC converters (15) that is configured to charge and discharge the corresponding electricity storage pack (12); and
a corresponding controller (16) among the plurality of controllers (16) that is configured to control the corresponding DC/DC converter (15).

Another electricity storage unit (10) of the electricity storage units (10) among the plurality of electricity storage units (10) includes:
another corresponding electricity storage pack (12) among the plurality of electricity storage packs (12);
another corresponding DC/DC converter (15) among the plurality of DC/DC converters (15) that is configured to charge and discharge the another corresponding electricity storage pack (12); and
another corresponding controller (16) among the plurality of controllers (16) that is configured to control the another corresponding DC/DC converter (15).

The corresponding controller (16) is configured to:
acquire a discharge voltage of the another corresponding electricity storage pack (12) from the another corresponding controller (16) by communication; and
adaptively control an output of the corresponding DC/DC converter (15) such that discharge voltages of the plurality of electricity storage packs (12a-12h) provided in the plurality of electricity storage units (10a-10h) approach one another.

This item prevents variation in SOC during discharge among electricity storage units (10a-10h) connected in parallel to one another.

Item 2

The electricity storage system (1) according to Item 1, in which
the controller (16) is configured to:
control the DC/DC converter (15) to maintain, at a target value, an output voltage of the DC/DC converter (15) provided in the electricity storage unit (10) (including the controller); and
decrease the target value of the output voltage of the DC/DC converter (15) by a predetermined value when the discharge voltage of the electricity storage pack (12) provided in the electricity storage unit (10) (including the controller) is lower than discharge voltages of all other electricity storage packs (12) acquired from other controllers (16).

That is, the corresponding controller (16) is configured to:
control the corresponding DC/DC converter (15) to maintain, at a target value, an output voltage of the corresponding DC/DC converter (15); and
decrease the target value of the output voltage of the corresponding DC/DC converter (15) by a predetermined value when a discharge voltage of the corresponding electricity storage pack (12) is lower than discharge voltages of all other one or more electricity storage packs (12) of the corresponding electricity storage pack (12) among the plurality of electricity storage packs (12) acquired from one or more controllers (16) among the plurality of controllers (16) other than the each controller (16).

This item prevents a significant increase in the discharge current of the electricity storage pack (12) having a discharge voltage lower than the others.

### Item 3

The electricity storage system (1) according to Item 1, in which
the controller (16) is configured to:
control the DC/DC converter (15) to maintain, at target value, an output voltage of the DC/DC converter (15) provided in the electricity storage unit (10) (including the controller); and
decrease the target value of the output voltage of the DC/DC converter (15) by a predetermined value when an output current of the DC/DC converter (15) provided in the electricity storage unit (10) (including the controller) exceeds an upper limit value.

That is, the corresponding controller (16) is configured to:
control the corresponding DC/DC converter (15) to maintain, at a target value, an output voltage of the corresponding DC/DC converter (15); and
decrease the target value of the output voltage of the corresponding DC/DC converter (15) by a predetermined value when an output current of the corresponding DC/DC converter (15) exceeds an upper limit value.

This item prevents stopping output due to overcurrent protection.

### Item 4

The electricity storage system (1) according to Item 1, in which
the controller (16) is configured to:
control the DC/DC converter (15) to maintain, at a target value, an output voltage of the DC/DC converter (15) provided in the electricity storage unit (10) (including the controller); and
decrease the target value of the output voltage of the DC/DC converter (15) by a predetermined value when a discharge current of the electricity storage pack (12) provided in the electricity storage unit (10) (including the controller) exceeds an upper limit value.

That is, the corresponding controller (16) is configured to:
control the corresponding DC/DC converter (15) to maintain, at a target value, an output voltage of the corresponding DC/DC converter (15); and
decrease the target value of the output voltage of the corresponding DC/DC converter (15) by a predetermined value when a discharge current of the corresponding electricity storage pack (12) exceeds an upper limit value.

This item prevents stop of an output due to overcurrent protection.

### Item 5

The electricity storage system (1) according to any one of Items 2 to 4, in which the controller (16) is configured to decrease the target value of the output voltage of the DC/DC converter (15) stepwise.

That is, the corresponding controller (16) is configured to decrease the target value of the output voltage of the corresponding DC/DC converter (15) stepwise.

This item prevents the SOC variation while avoiding sudden fluctuation in the discharge current.

### Item 6

An electricity storage unit (10) configured to be connected in parallel to another electricity storage unit, the electricity storage unit (10) being connected to a direct-current (DC) bus (2) connected to a load (3), the electricity storage unit including:
an electricity storage pack (12);
a DC/DC converter (15) configured to charge and discharge the electricity storage pack (12); and
a controller (16) configured to control the DC/DC converter (15).

The another electricity storage unit includes:
another electricity storage pack (12);
another DC/DC converter (15) configured to charge and discharge the another electricity storage pack (12); and
another controller (16) configured to control the another DC/DC converter (15).

The controller (16) is configured to:
acquire a discharge voltage of the another electricity storage pack (12) provided in the another electricity storage unit (10) from the another controller (16) by communication; and
adaptively control an output of the DC/DC converter (15) such that discharge voltages of a plurality of electricity storage packs (12) provided in a plurality of electricity storage units (10a-10h) connected in parallel to one another approach one another.

That is, an electricity storage unit (10a) is configured to be connected in parallel to one or more other electricity storage units (10b-10h), the electricity storage unit (10a) and the one or more other electricity storage units (10b-10h) being configured to be connected to a direct-current (DC) bus (2) connected to a load (3).

The electricity storage unit (10a) includes:
an electricity storage pack (12),
a DC/DC converter (15) configured to charge and discharge the electricity storage pack (12); and
a controller (16) configured to control the DC/DC converter (15).

Each of the one or more other electricity storage units (10b-10h) includes:
another electricity storage pack (12);
another DC/DC converter (15) configured to charge and discharge the another electricity storage pack (12); and
another controller (16) configured to control the another DC/DC converter (15).

The controller (16) is configured to:
acquire a discharge voltage of the another electricity storage pack (12) from the another controller (16) by communication; and
adaptively control an output of the DC/DC converter (15) such that discharge voltages of the electricity storage pack (12) and the another electricity storage pack (12) approach each other.

This item prevents variation in SOC during discharge among the electricity storage units (10a-10h) connected in parallel to one another.

### REFERENCE MARKS IN THE DRAWINGS

- 1: battery system
- 2: DC bus
- 3: load
- 10: battery unit
- 11: battery module
- 12: battery pack
- 13: battery control unit
- 14: converter module
- 15: DC/DC converter
- 16: controller
- 20: communication line

## Claims

1. An electricity storage system comprising
a plurality of electricity storage units connected in parallel to one another, the plurality of electricity storage units configured to be connected to a direct-current (DC) bus connected to a load, wherein
each of the plurality of electricity storage units includes:
an electricity storage pack;
a DC/DC converter configured to charge and discharge the electricity storage pack; and
a controller configured to control the DC/DC converter, and
the controller is configured to:
acquire a discharge voltage of another electricity storage pack of another electricity storage unit from another controller by communication; and
adaptively control an output of the DC/DC converter provided in an electricity storage unit out of the plurality of electricity storage units which includes the controller such that discharge voltages of a plurality of the electricity storage packs provided in the plurality of electricity storage units approach one another.

2. The electricity storage system according to claim 1, wherein the controller is configured to:
control the DC/DC converter to maintain, at a target value, an output voltage of the DC/DC converter provided in the electricity storage unit including the controller; and
decrease the target value of the output voltage of the DC/DC converter by a predetermined value when the discharge voltage of the electricity storage pack provided in the electricity storage unit including the controller is lower than discharge voltages of all other electricity storage packs acquired from other controllers.

3. The electricity storage system according to claim 1, wherein the controller is configured to:
control the DC/DC converter to maintain, at a target value, an output voltage of the DC/DC converter provided in the electricity storage unit including the controller; and
decrease the target value of the output voltage of the DC/DC converter by a predetermined value when an output current of the DC/DC converter provided in the electricity storage unit including the controller exceeds an upper limit value.

4. The electricity storage system according to claim 1, wherein the controller is configured to:
control the DC/DC converter to maintain, at a target value, an output voltage of the DC/DC converter provided in the electricity storage unit including the controller; and
decrease the target value of the output voltage of the DC/DC converter by a predetermined value when a discharge current of the electricity storage pack provided in the electricity storage unit including the controller exceeds an upper limit value.

5. The electricity storage system according to any one of claims 2 to 4, wherein the controller is configured to decrease the target value of the output voltage of the DC/DC converter stepwise.

6. An electricity storage unit configured to be connected in parallel to another electricity storage unit, the electricity storage unit and the another electricity storage unit being configured to a direct-current (DC) bus connected to a load, the electricity storage unit comprising:
an electricity storage pack;
a DC/DC converter configured to charge and discharge the electricity storage pack; and
a controller configured to control the DC/DC converter, wherein
the another electricity storage unit includes:
another electricity storage pack;
another DC/DC converter configured to charge and discharge the other electricity storage pack; and
another controller configured to control the another DC/DC converter, and
the controller is configured to:
acquire a discharge voltage of the another electricity storage pack of the another electricity storage unit from the another controller by communication; and
adaptively control an output of the DC/DC converter such that discharge voltages of a plurality of electricity storage packs provided in a plurality of electricity storage units connected in parallel to one another approach one another.
